# EUROPÄISCHE PATENTSCHRIFT

(11) **EP 0 722 827 B1**
(45) Veröffentlichungstag und Bekanntmachung des Hinweises auf die Patenterteilung: **23.07.2003**
(21) Anmeldenummer: 96100068.4
(22) Anmeldetag: 04.01.1996
(51) Int. Cl.: B32B 5/20, C08G 18/10, C08G 18/48

(54) **Verwendung eines Folienverbundkörpers als selbsttragendes Bauteil im Automobilbereich**
Use of a composite foil article as self-supporting element in vehicles
Article stratifié multicouche comme élément auto-portant pour véhicules automobiles

(30) Priorität: 17.01.1995 DE 19501198
(43) Veröffentlichungstag der Anmeldung: 24.07.1996
(73) Patentinhaber: BAYER AG, 51368 Leverkusen (DE)
(72) Erfinder: Liman, Ulrich, Dr., D-40764 Langenfeld (DE); Kath, Hans, D-51109 Köln (DE); Huland, Klaus-Werner, D-42929 Wermelskirchen (DE)

(56) Entgegenhaltungen:
- US-A- 4 134 610
- US-A- 4 452 829
- US-A- 4 508 774
- US-A- 4 938 819

## Beschreibung

Die vorliegende Erfindung betrifft die Verwendung eines Folienverbundkörpers auf Basis von Polyurethan-(PUR)-Schaumstoffen und flexiblen, dünnen Deckschichten für die Ausrüstung von Kraftfahrzeugen. Der dabei verwendete PUR-Schaumstoff zeichnet sich durch eine extrem geringe Wärmeausdehnung und für das Bauteil notwendige Härte aus.

Verbundkörper auf Basis von PUR-Schaumstoffen und Deckschichten finden vielfach Verwendung im Kraftfahrzeug wie z.B. in Schalttafeln, Armlehnen, Mittelkonsolen oder Stoßfängern. Um für eine ausreichende Dimensionsstabilität zu sorgen, müssen entweder Versteifungselemente aus Metall und/oder Kunststoff wie z.B. bei einer Schalttafel oder eine ausreichend dicke, steife Deckschicht wie z.B. die Verkleidungsschale eines Stoßfängers verwendet werden, um im Temperaturbereich von -30°C bis 120°C die gewünschte Bauteilpassgenauigkeit zu gewährleisten. Der Längenausdehnungskoeffizient, nachfolgend auch Wärmeausdehnungskoeffizient genannt, der zur Zeit üblichen Rohstoffmaterialien wie z.B. Polypropylen, Acryl-Butadien-Styrol (ABS), PUR-Füllschaumstoffe, etc. liegt dabei im Bereich von mehr als 100x10⁻⁶ K⁻¹, sofern keine Hilfsmittel wie Füllstoffe oder Glasmatten verwendet werden

US-A-4508774 definiert selbstragende Bauteile, hergestellt aus zellulärem Polyurethanschaum einer Dichte von 15-400 kg/m³ mit einer verstärkenden oder dekorativen (flexiblen) Deckschicht bis zu 0,3 mm stark, welche in der Form selbst mit dem angeschäumten PU-Schaum (MDI als Monomer) mittels in-mold foaming verbunden wird. Die Verwendung liegt im Automobilbereich für Schalttafeln, Dachhimmel und energieabsorbierende Elemente.
Die Stauchhärte wird mittels DIN 53421 bestimmt und beträgt 140 kPa.

US-A-4134610 definiert Stoßfängers mit hoher Schockabsorption und deren Herstellung als selbstragendes Bauteil, hergestellt aus halbhartem Polyurethanschaum aus Polyether, Polyol, Polyisocyanat (MDI), (Thio)urea und Alkanolaminen einer Dichte von 50-150 kg/m³ mit einer verstärkenden, schützenden dünnen Deckschicht, welche in der Form selbst mit dem angeschäumten PU-Schaum verbunden wird. Die verbleibende Deformation bei dynamischer Kompression von 60% zwischen -40°C und +60°C beträgt nach 30 Minuten nicht mehr als 1%.

Erfindungsgemäß wird nun ein Verbundkörper auf Basis einer flexiblen, dünnen Deckschicht in Verbindung mit einem angeschäumten PUR-Schaumstoff, der einen Wärmeausdehnungskoeffizienten von weniger als 100x10⁻⁶ K⁻¹ und einer Stauchhärte von 200-900 kPa bei 40 % Kompression besitzt, ohne Mitverwendung von zusätzlichen Hilfsmitteln, wie z.B. Füllstoffen, Glasmatten etc. als selbsttragendes Bauteil im Automobilbereich eingesetzt. Der Verzicht auf derartige Hilfsmittel schließt nicht aus, daß bei der Verbundstoffherstellung Montageelemente eingearbeitet werden, die zur Befestigung des gewünschten Bauteiles im Kraftfahrzeug dienen. Diese Montageelemente besitzen keinen signifikanten Effekt zur Dimensionsstabilität des Bauteiles. Der erfindungsgemäßen zu verwendende Verbundstoff ermöglicht ein wesentlich geringers Bauteilgewicht verglichen mit analogen Bauteilen, die nach dem jetzigen Stand der Technik konstruiert werden.

Gegenstand der Erfindung ist die Verwendung eines Folienverbundkörpers, der durch Anschäumen eines Urethan- und gegebenenfalls Isocyanuratgruppen aufweisenden Schaumstoffs einer Dichte unter 300 g/l, vorzugsweise einer Dichte von 20 - 150 g/l, der einen Wärmeausdehnungskoeffizienten von < 100x10⁻⁶ K⁻¹ besitzt, und
eine Stauchhärte von 200-900 kPa bei 40 % Kompression besitzt, an eine flexible Deckschicht einer Stärke unter 10 mm, vorzugsweise unter 2 mm, in einer Form erhalten worden ist, als von Versteifungselemente freies, selbsttragendes Bauteil im Automobilbereich.

Erfindungsgemäß ist bevorzugt, daß
- der Urethan- und gegebenenfalls Isocyanuratgruppen aufweisende Schaumstoff eine Dichte von 20 bis 90 g/l besitzt,
- der Urethan- und gegebenenfalls Isocyanuratgruppen aufweisende Schaumstoff mit Polyisocyanaten vom Typ des Diphenylmethandiisocyanats erhalten worden ist,
- als flexible Deckschichten Kunststoffolien, Kunststoffschalen, Textilfolien, Lederhäute oder dünne Metalle verwendet werden,
- der Folienverbundkörper als Stoßfänger von Automobilen, für Schalttafeln und für energieabsorbierende Schutzelemente im Türbereich verwendet wird.

Die Herstellung von Urethan- und gegebenenfalls Isocyanuratgruppen aufweisenden Schaumstoffen ist an sich bekannt und z.B. in DE-NA 11 12 285, GB-PS 11 04 394, DE-OS 15 95 844 und 17 69 023 sowie im Kunststoff-Handbuch Band VII, Polyurethane, herausgegeben von Vieweg und Höchtlen, Carl-Hanser-Verlag München 1966 sowie in der Neuauflage dieses Buches, herausgegeben von G. Oertel, Carl-Hanser-Verlag München, Wien 1983, beschrieben.

Für die Herstellung der Schaumstoffe werden eingesetzt:
a) Gemische von Diphenylmethan-diisocyanaten und Poly-phenyl-polymethylenpolyisocyanaten (rohes MDI), vorzugsweise solche Gemische, in denen die Polyphenyl-polymethylen-polyisocyanate zu mehr als 10 Gew.-%, insbesondere zu 25 - 65 Gew.-% vorhanden sind. Daneben können anteilmäßig (bis zu 50 Gew.-%, andere Polyisocyanate im Gemisch vorhanden sein, z.B. aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche Formel

   Q(NCO)ₙ

   in der
   n = 2-4, vorzugsweise 2 und 3, und
   Q einen aliphatischen Kohlenwasserstoffrest mit 2-18, vorzugsweise 6-C-Atomen, einen cycloaliphatischen Kohlenwasserstoffrest mit 4-15, vorzugsweise 5-10 C-Atomen, bevorzugt einen aromatischen Kohlenwasserstoffrest mit 6-15, vorzugsweise 6-13 C-Atomen oder einen araliphatischen Kohlenwasserstoffrest mit 8-15, vorzugsweise 8-13 C-Atomen bedeuten, z.B. solche Polyisocyanate, wie sie in der DE-OS 28 32 253, Seiten 10-11, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI").
b) Ausgangskomponenten sind ferner Verbindungen mit mindestens zwei gegenüber Isocyanaten reaktionsfähigen Wasserstoffatomen von einem Molekulargewicht in der Regel von 400-10.000 ("Polyolkomponente"). Hierunter versteht man neben Aminogruppen, Thiogruppen oder Carboxylgruppen aufweisende Verbindungen vorzugsweise Hydroxylgruppen aufweisende Verbindungen, insbesondere 2 bis 8 Hydroxylgruppen aufweisende Verbindungen, speziell solche vom Molekulargewicht 1.000 bis 6.000, vorzugsweise 2.000 bis 6.000, z.B. mindestens 2, in der Regel 2 bis 8, vorzugsweise aber 2 bis 6 Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der DE-OS 28 32 253, Seiten 11-18, beschrieben werden.
   Die zur Herstellung des Schaumstoffs bevorzugt verwendeten Polyole sind hydroxyterminierte Polyoxyalkylenpolyether. Sie sind mit den üblichen Methoden hergestellt, wie z.B. der basenkatalysierten Addition von Alkylenoxiden wie Oxiran, Methyloxiran oder Ethyloxiran an ein Startermolekül (Initiator). Beispiele solcher Initiatoren sind: Ethylenglykol, Propylenglykol, Neopentylglykol, Butylenglykol, Hydrochinon, die Bisphenole, Aniline und andere aromatische Monoamine, aliphatische Monoamine und Monoester von Glyzerin; trifunktionelle Initiatoren wie Glyzerin, Trimethylolpropan, Trimethylolethan, N-Alkylphenylendiamine, Mono-, Di- und Trialkanolamine; tetrafunktionelle Initiatoren wie Ethylendiamin, Propylendiamin, 2,4'-, 2,2', und 4,4' Methylendianiline, Toluylendiamine und Pentaerythritol; und hexa- und octafunktionelle Initiatoren wie Sorbitol and Sucrose. Die Addition des Alkylenoxids an das Startermolekül kann gleichzeitig oder bei Verwendung verschiedener Alkylenoxide sequentiell durchgeführt werden, um Block-, Heteric- oder Block-Heteric-Polyether herzustellen. Literatur hierzu findet sich in "Polyurethane Handbook" und "Polyurethanes: Chemistry and Technology".
   Bevorzugte Polyether in der vorliegenden Erfindung sind Polyether gestartet auf Propylenglykol, Glyzerin und Trimethylolpropan hergestellt durch Propoxylierung mit Propylenoxid mit einem terminalen Ethylenoxidblock von 0 bis 50 %. Mischungen dieser Polyether können auch verwendet werden. Ebenso können die in der Polyurethanchemie bekannten Polyesterpolyole oder Polycarbonatpolyole in der Polyolkomponente verwendet werden.
c) Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19-20, beschrieben.
d) Als Treibmittel wird vorzugsweise Wasser eingesetzt. Leicht flüchtige organische Verbindungen wie n- oder i-Pentan, Cyclopentan, 1,1,1,2-Tetrafluorethan oder Hexafluorbutan können gegebenenfalls zusätzlich mitverwendet werden.
f) Gegebenenfalls werden Hilfs- und Zusatzmittel mitverwendet wie
   - weitere leicht flüchtige organische Substanzen und/oder Wasser als zusätzliche Treibmittel, wobei Wasser in der Regel in einer Menge von 0,1 bis 10 Gew.-%, bezogen auf die Komponente b), eingesetzt wird,
   - Katalysatoren der aus der Polyurethanchemie an sich bekannten Art
   - oberflächenaktive Zusatzstoffe, wie Emulgatoren und Schaumstabilisatoren,
   - Flammschutzmittel, z.B. phosphorhaltige, halogenfreie Flammschutzmittel wie Triethylphosphat, Diphenylkresylphosphat, roter Phosphor, Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs-und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs-und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen sowie fungistatisch und bakteriostatisch wirksamen Substanzen sowie Einzelheiten über Verwendungs-und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Durchführung des Verfahrens zur Herstellung der Hartschaumstoffe:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121-205 beschrieben.

Erfindungsgemäß wird in der Regel bei einer Kennzahl von 90-300, oft bei einer Kennzahl über 150, z.B. von 200-300, gearbeitet.

Die Verschäumung erfolgt in geschlossenen Formen.

Als Deckschicht kommen die im Markt üblichen Folien oder Formhäute mit einer Dicke von weniger als 10 mm, vorzugsweise weniger als 2 mm, in Frage. Die Folien (z.B. PVC/ABS; ASA etc.) werden beispielsweise nach dem Thermoformverfahren tiefgezogen und bilden die Deckschicht des Formkörpers. Alternative Prozesse zur Herstellung flexibler, weicher Deckschichten wie z.B. das Powder-Slush-Moulding von PVC Pulvern zur Herstellung von Formhäuten kommen genauso in Frage. Ebenso können andersartige Deckschichten wie z.B. mit Textil beschichtete Folien verwendet werden.

Die PUR-Schaumstoffe des Folienverbundkörpers zeichnen sich durch eine Formschaumdichte von weniger als 300 g/l, vorzugsweise von 20-150 g/l, insbesondere von 20-90 g/l sowie einer Stauchhärte von kPa 200-900 kPa bei 40 % Kompression, sowie eines Wärmeausdehnungskoeffizienten von weniger als 100x10⁻⁶ K⁻¹ vorzugsweise von weniger als 25x10⁻⁶ K⁻¹ aus. Der geringe Wärmeausdehnungskoeffizient ist durch die Verwendung von Polyetherpolyolen mit Wasser als Treibmittel auf der Polyolseite und polymeren Diphenylmethandiisocyanaten mit einem polymeren Anteil von mehr als 10 %, vorzugsweise von 25 bis 65 %, auf der Isocyanatseite möglich.

### Ausführungsbeispiele

Das verwendete polymere Diphenylmethandiisocyanat (MDI) hat einen polymeren Anteil von 50 Gew.-%, einen Isocyanatgehalt von 31 Gew.-% und eine Viskosität von 200mPas (Desmodur® 44 V20; Bayer AG). Polyether A ist ein trifunktioneller Polyether, hergestellt durch Propoxylierung von Trimethylolpropan mit anschließender Ethoxylierung (OH-Zahl 28). Polyether B ist ein trifunktioneller Polyether, hergestellt durch Propoxylierung von Trimethylolpropan und anschließende Ethoxylierung, auf dem ein Gehalt von 20 Gew.-% Styrol-Acrylnitril durch Pfropfung aufgebracht ist (OH-Zahl 28). Polyether C ist ein bifunktioneller Polyether, hergestellt durch Propoxylierung von Popylenglykol mit anschließender Ethoxylierung (OH-Zahl 28). D ist das Propoxylierungsprodukt von Triethanolamin (OH-Zahl 500). E ist das Propoxylierungsprodukt von Sorbit (OH-Zahl 100). F ist das Propoxylierungsprodukt von Ethylendiamin (OH-Zahl 630). Verbindung G ist ein Aminocrotonsäureester. H ist das Propoxylierungsprodukt von Propylenglykol (OH-Zahl 180), Verbindung K ist N,N-Dimethylcyclohexylamin. Polyether M ist ein Propoxylierungsprodukt einer Startermischung aus Sucrose, Propylenplykol und Wasser mit einer Funktionalität von 5.3 (OH-Zahl 470). N ist das Propoxylierungsprodukt von Trimethylolpropan (OH-Zahl 380). P ist eine 25 Gew.-%ige Lösung von Kaliumacetat in Diethylenglykol. R ist Dimethylaminoethoxyethanol. B 4690 ist ein Stabilisator von Fa. Goldschmidt.

Die unten beschriebenen chemischen Polyolformulierungen sind mit den üblichen Methoden der Hand- und Maschinenvermischung verarbeitet worden, wie sie in der Polyurethanverarbeitung seit langem bekannt sind. Die Reaktivitätsdaten und die Freischaumdichte wurden durch Handverschäumung in einem 500 ml Becherglas ermittelt. Die freie Raumdichte, die Steigzeit und Startzeit sind an handvermischten Proben ermittelt worden wie dies im Bereich der PUR-Schäume üblich ist. Der Wärmeausdehnungskoeffizient nach der Methode DIN 53752, der Foggingwert nach DIN 75201 und die Stauchhärte bei 40 % Kompression nach DIN 53577 wurden an durch Maschinenverschäumung hergestellten Formkörpern (20 x 20 x 4 cm) ermittelt.

Formulierung 1 aus Tabelle 1 beschreibt einen nach dem Stand der Technik zur Herstellung von Schalttafeln eingesetzten PUR-Füllschaumstoff. Eine ausreichende Dimensionsstabilität ist nur durch einen verstärkenden Träger erreichbar, auf dem der Schaumstoff haftet. Aus den Formulierungen 2 bis 4 lassen sich die erfindungsgemäß verwendeten Formkörper durch Anschäumung an die gewünschte Deckschicht herstellen. Aufgrund des geringen Wärmeausdehnungskoeffizienten lassen sich daraus passgenaue Bauteile für den Einsatz des hergestellten Bauteiles. Formulierung 2 ist für den Anwendungsbereich des Stoßfängers geeignet, Formulierung 3 und 4 für Schalttafelanwendungen sowie für energieabsorbierende Schutzelemente im Türbereich.

**Tabelle 1:**

| Polyolformulierungen, Reaktivitäten und Eigenschaften gemäß Stand der Technik und erfindungsgemäßer Beispiele | | | | |
|---|---|---|---|---|
| **Formulierung (Beispiele)** | **1** | **2** | **3** | **4** |
| Polyether A | 72 | | | |
| Polyether B | 18 | 80 | | |
| Polyether C | | | 67 | |
| Polyether M | | | 17 | |
| K | | | 2 | |
| H | | | | 70 |
| N | | | | 20 |
| Glyzerin | | | | 7 |
| P | | | 4 | 2 |
| R | | | | 1,5 |
| B 4690 | | | 1 | 0,1 |
| D | 2,75 | | | |
| F | | 10 | 55 | |
| Triethanolamin | | 2 | | |
| Diethanolamin | 0,5 | 2 | 1 | |
| E | | 2 | 0,1 | |
| G | 2,0 | 2,7 | | |
| Wasser | 3,4 | 4,5 | 4 | 7 |
| MDI | 60 | 100 | 300 | 280 |
| **Kennzahl** | **100** | **100** | **252** | **200** |
| **Formteildichte** | **70** | **70** | **70** | **50** |
| Startzeit (s) | 14 | 13 | 18 | 6 |
| Steigzeit (s) | 115 | 85 | 57 | 32 |
| Fogging, Methode B (mg) | 0,5 | 0,7 | 0,9 | 0,5 |
| Freischaumdichte (g/l) | 55 | 54 | 38 | 33 |
| Wärmeausdehnungskoeffizient (10⁻⁶K⁻¹ | 155 | 65 | 13 | 11 |
| Stauchhärte bei 40 % Kompression (kPa) | 53 | 200 | 700 | 400 |

## Patentansprüche

1. Verwendung eines Folienverbundkörpers, der durch Anschäumen eines Urethan- und gegebenenfalls Isocyanuratgruppen aufweisenden Schaumstoffs einer Dichte unter 300 g/l, vorzugsweise einer Dichte von 20 bis 150 g/l, der einen Wärmeausdehnungskoeffizienten von < 100x10⁻⁶ K⁻¹ (gemessen nach DIN 53752) und eine Stauchhärte von 200 bis 900 kPa bei 40% Kompression (gemessen nach DIN 53577) besitzt, an eine flexible Deckschicht einer Stärke unter 10 mm, vorzugsweise unter 2 mm, in einer Form erhalten worden ist, als von Versteifungselementen freies, selbsttragendes Bauteil im Automobilbereich.

2. Verwendung gemäß Anspruch 1, **dadurch gekennzeichnet, dass** der Urethan- und gegebenenfalls Isocyanuratgruppen aufweisende Schaumstoff eine Dichte von 20 bis 90 g/l besitzt.

3. Verwendung gemäß Anspruch 1 oder 2, **dadurch gekennzeichnet, dass** der Urethan- und gegebenenfalls Isocyanuratgruppen aufweisende Schaumstoff mit Polyisocyanaten vom Typ des Diphenylmethandiisocyanats erhalten worden ist.

4. Verwendung gemäß einem der Ansprüche 1 bis 3, **dadurch gekennzeichnet, dass** als flexible Deckschichten Kunststofffolien, Kunststoffschalen, Textilfolien, Lederhäute oder dünne Metalle verwendet werden.

5. Verwendung eines Folienverbundkörpers gemäß einem der Ansprüche 1 bis 4 als Stoßfänger von Automobilen.

6. Verwendung eines Folienverbundkörpers gemäß einem der Ansprüche 1 bis 4 für Schalttafeln.

7. Verwendung eines Folienverbundkörpers gemäß einem der Ansprüche 1 bis 4 für energieabsorbierende Schutzelemente im Türbereich.

## Claims

1. Use of a composite sheet body obtained by foaming a foam of a density of less than 300 g/l, preferably of a density of from 20 to 150 g/l, having urethane groups and optionally isocyanurate groups, which has a coefficient of thermal expansion of < 100x10⁻⁶ K⁻¹ (measured in accordance with DIN 53752) and a compressive strength of from 200 to 900 kPa at 40% compression (measured in accordance with DIN 53577), onto a flexible facing less than 10 mm thick, preferably less than 2 mm thick, in a mould, as a self-supporting component without stiffening elements, in the automobile sector.

2. Use according to Claim 1, **characterised in that** the foam which has urethane groups and optionally isocyanurate groups has a density of from 20 to 90 g/l.

3. Use according to Claim 1 or 2, **characterised in that** the foam which has urethane groups and optionally isocyanurate groups has been obtained using polyisocyanates of the diphenylmethane diisocyanate type.

4. Use according to any one of Claims 1 to 3, **characterised in that** plastics sheets, plastics shells, textile sheets, leather skins or thin metals are used as flexible facings.

5. Use of a composite sheet body according to any one of Claims 1 to 4 as an automobile bumper.

6. Use of a composite sheet body according to any one of Claims 1 to 4 for instrument panels.

7. Use of a composite sheet body according to any one of Claims 1 to 4 for energy-absorbing protective elements in the door region.

## Revendications

1. Utilisation d'un article stratifié multicouche, qui a été obtenu dans un moule par le dépôt d'une mousse comportant des groupes uréthane et le cas échéant des groupes isocyanurate et présentant une masse volumique inférieure à 300 g/l, de préférence une masse volumique de 20 à 150 g/l, qui possède un coefficient de dilatation thermique de < 100 x 10⁶ K⁻¹ (mesuré selon la norme DIN 53752) et une résistance à l'écrasement de 200 à 900 kPa sous 40 % de compression (mesurée selon la norme DIN 53577), sur une couche de recouvrement flexible d'une épaisseur de moins de 10 mm, de préférence de moins de 2 mm, comme élément auto-portant, dépourvu d'éléments de raidissement, pour véhicules automobiles.

2. Utilisation selon la revendication 1, **caractérisée en ce que** la mousse comportant des groupes uréthane et le cas échéant des groupes isocyanurate possède une masse volumique de 20 à 90 g/l.

3. Utilisation selon la revendication 1 ou 2, **caractérisée en ce que** la mousse comportant des groupes uréthane et le cas échéant des groupes isocyanurate a été obtenue avec des polyisocyanates du type du diphénylméthanediisocyanate.

4. Utilisation selon l'une quelconque des revendications 1 à 3, **caractérisée en ce que** l'on utilise comme couches de recouvrement flexibles des films plastiques, des coquilles plastiques, des films textiles, des peaux de cuir ou des métaux minces.

5. Utilisation d'un article stratifié multicouche selon l'une quelconque des revendications 1 à 4 comme pare-chocs pour des automobiles.

6. Utilisation d'un article stratifié multicouche selon l'une quelconque des revendications 1 à 4 pour des tableaux de distribution.

7. Utilisation d'un article stratifié multicouche selon l'une quelconque des revendications 1 à 4 comme éléments protecteurs à absorption d'énergie dans la région des portières.
